# EUROPÄISCHE PATENTSCHRIFT

(11) **EP 0 375 607 B1**
(45) Veröffentlichungstag und Bekanntmachung des Hinweises auf die Patenterteilung: **01.06.1994**
(21) Anmeldenummer: 89810901.2
(22) Anmeldetag: 24.11.1989
(51) Int. Cl.: H02G 3/04

(54) **Brüstungskanalanordnung**
Wall trunking arrangement
Dispositif de goulotte de paroi

(30) Priorität: 22.12.1988 CH 4743/88
(43) Veröffentlichungstag der Anmeldung: 27.06.1990
(73) Patentinhaber: LANZ OENSINGEN AG, 4702 Oensingen (CH)
(72) Erfinder: Mühlethaler, Erhard, CH-3314 Schalunen (CH)
(74) Vertreter: OK pat AG

(56) Entgegenhaltungen:
- CH-A- 525 574
- GB-A- 2 137 305
- US-A- 3 354 301

## Beschreibung

Die Erfindung betrifft eine Brüstungskanalanordnung mit mehreren sich in Kanal-Längsrichtung erstreckenden austauschbar aufgenommenen Leitungskanälen. Anordnungen dieser Art werden an Fensterbrüstungen, unter Wandvorsprüngen o. dgl. vorwiegend in Büro- und Verwaltungsbauten angebracht. Sie dienen zur geschützten und geordneten Führung von Leitungen aller Art, wie Netzstromkabel, Fernmeldeleitungen, Daten- und Signalleitungen usw. sowie nach Bedarf zur Aufnahme von Steckdosen und weiteren Apparaten wie Abzweigdosen, Schaltern, Signaltasten usw. im Bereich von Arbeitsplätzen. Es sind Brüstungskanäle in mannigfaltiger Ausführung bekannt, die meist als geschlossenes Kastenprofil ausgeführt sind, an welchem eine Seite als Deckel oder Schieber ausgebildet ist. Oft weisen sie ein aufwendiges Innenprofil auf und sind aus Aluminium oder Kunststoff stranggepresst. Vor allem bezüglich Querschnittabmessungen, Material und Farbgebung ist bisher eine grosse Vielfalt von Modellen als notwendig erachtet worden, um eine einigermassen ästhetische und funkionelle Anpassung an Umgebung und Anforderungen zu ermöglichen. Trotz des hohen Aufwandes müssen indessen oft unbefriedigende Kompromisse eingegangen werden. Sodann werden bei bekannten Ausführungen Steckdosen und andere Apparate im allgemeinen frontseitig angebracht, wodurch der Kanalquerschnitt in jenem Bereich für die Leitungsführung "verloren" ist. Im Falle von besonderen Frontabdeckungen, die der Raumgestaltung angepasst sind, erfordert die Montage der Apparate einen beträchtlichen zusätzlichen Aufwand, und das Ergebnis ist dennoch eher unbefriedigend.

Eine Brüstungskanalanordnung mit mehreren austauschbar aufgenommenen Leitungskanälen ist aus Dokument CH-A-525574 bekannt.

Eine weitere Kanalanordnung mit zwei Leitungskanälen, wobei zwischen zwei ihrer Wände ein Scharnier angeordnet ist, ist aus Dokument US-A-3 354 301 bekannt.

Eine dritte Kanalanordnung wobei mehrere im Abstand voneinander angeordnete, viereckige Rahmen vorgesehen sind, welche zur Wandbefestigung und als Träger von außenliegenden Verkleidungsmitteln ausgebildet sind, ist im Dokument GB-A-2 137 305 offenbart.

Aufgabe der Erfindung ist es, eine Brüstungskanalanordnung zu schaffen, welche bei einfacher und einheitlicher Konstruktion sich den verschiedenen baulichen Gegebenheiten leicht anpassen lässt und die freie Wahl der darüberliegenden Fensterbank und einer Frontabdeckung zulässt. Ferner soll auch die Aufteilung und Nutzung des Innenquerschnittes entsprechend den Anforderungen der Installation variabel sein und eine einfache Leitungsverlegung und Apparate-Montage wie auch Nachinstallationen ermöglichen.

Die Lösung dieser Aufgabe ist erfindungsgemäss gekennzeichnet durch mehrere im Abstand voneinander angeordnete, viereckige Rahmen, welche zur Wandbefestigung mit zueinander parallelen Ebenen und zur austauschbaren Aufnahme der im Innern der Rahmen durchlaufenden Leitungskanäle ausgebildet sowie als Träger von aussenliegenden Verkleidungsplatten an mindestens zwei Seiten bestimmt sind, wobei jeweils eine der vier Rahmenseiten mit einer angrenzenden Rahmenseite über ein Scharnier verbunden und ausschwenkbar ist. Eine solche Lösung erlaubt eine kostengünstige, standardisierte Herstellung und weitgehende Vormontage, ist aber dennoch sehr anpassungsfähig, indem Fensterbank und Brüstung bzw. die gesamte Verkleidung bauseits frei gestaltet und nachträglich montiert werden können. Das Innere der Kanalanordnung ist durch Ausschwenken der einen Rahmenseite für die Leitungsverlegung leicht zugänglich. Steckdosen und Apparate können wie bisher frontseitig, aber auch im Innern oder aussen an der in der Regel offenen Unterseite der Kanalanordnung angebracht werden. Dadurch können jegliche Anforderungen hinsichtlich Aussehen und Bedienung bzw. Zugänglichkeit erfüllt werden.

In den Ansprüchen 2 bis 11 sind verschiedene vorteilhafte Ausgestaltungen des im Anspruch 1 definierten Erfindungsgegenstandes angegeben.

Nachstehend wird die Erfindung anhand von Ausführungsbeispielen im Zusammenhang mit der Zeichnung näher erläutert.
- Fig. 1: zeigt perspektivisch und vereinfacht den allgemeinen Aufbau einer beispielsweisen Brüstungskanalanordnung,
- Fig. 2: veranschaulicht eine vorteilhafte Ausgestaltung der ausschwenkbaren Rahmenseite mit zwei einzeln angelenkten Schenkeln,
- Fig. 3: zeigt in Seitenansicht einen einzelnen Rahmen in bevorzugter Ausführung, versehen mit durchlaufenden Leitungskanälen und Apparateträgern,
- Fig. 4: ist ein Schnitt entlang der Linie IV-IV in Fig. 3,
- Fig. 5: zeigt perspektivisch ein Rahmenprofil mit Hakenreihen für den Rahmen nach Fig. 3,
- Fig. 6: zeigt die untere linke Ecke des Rahmens nach Fig. 3 im Schnitt,
- Fig. 7: zeigt perspektivisch einen Apparateträger mit Hakenorganen, und
- Fig. 8 und 9: veranschaulichen schematisch zwei Varianten bezüglich Lage der ausschwenkbaren Rahmenseite sowie weitere Montagemöglichkeiten.

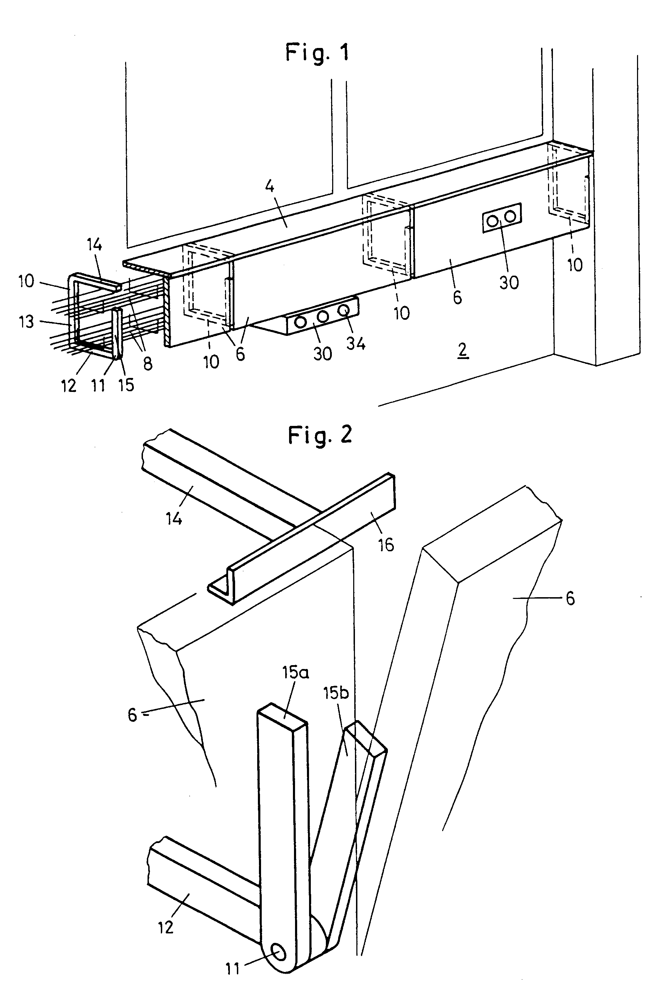

Der in Fig. 1 schematisch dargestellte Brüstungskanal weist mehrere viereckige, vorzugsweise rechteckige oder quadratische Rahmen 10 auf, welche im Abstand voneinander und mit zueinander parallelen Ebenen an einer Wand, hier an der Fensterbrüstung 2 befestigt sind. Die Abstände zwischen den Rahmen 10 werden je nach den baulichen Gegenbenheiten gewählt und sollen etwa 80 bis 100 cm betragen. In ihrem Innern nehmen die Rahmen 10 durchlaufende Leitungskanäle 8 auf, die, wie weiter unten näher erläutert, austauschbar in wählbarer Anordnung an den Rahmen 10 befestigt sind. Als Leitungskanäle 8 werden vorzugsweise solche aus einer an sich bekannten Gitterstruktur mit Längsstegen und diese verbindenden Querstegen verwendet. Die Rahmen 10 dienen ausserdem als Träger für Verkleidungsplatten: Im vorliegenden Fall ist eine durchgehende Fensterbank 4 mit den obenliegenden Rahmenseiten 14 verbunden, und eine in Abschnitte 6 unterteilte Frontblende ist an den senkrechten Rahmenseiten 15 befestigt, welche den an der Wand montierten Rahmenseiten 13 gegenüberstehen. Jeweils die eine Rahmenseite - hier die die Frontblenden 6 tragenden Seiten 15 - ist mit einer angrenzenden Rahmenseite 12 über ein Scharnier 11 verbunden und dadurch (zusammen mit der Frontblende) ausschwenkbar. Beim Ausschwenken entfernt sich der obere Rand der Frontblende 6 von der Vorderkante der Fensterbank 4, wodurch der Innenraum des Brüstungskanals zugänglich wird; der Schwenkwinkel kann durch geeignete, hier nicht näher dargestellte Mittel begrenzt sein.

Wenn, wie im vorliegenden Fall, die ausschwenkbaren Rahmenseiten 15 eine in Abschnitte 6 unterteilte Verkleidungsplatte tragen, ist es zweckmässig, wie in Fig. 2 dargestellt, jeweils zwei nebeneinanderliegende, einzeln angelenkte Schenkel 15a, 15b für die Befestigung der Abschnitte 6 vorzusehen, so dass diese unabhängig voneinander ausgeschwenkt werden können. Ferner ist gemäss Fig. 2 am freien Ende der festen Rahmenseite 14, welche gegen die ausschwenkbare Rahmenseite 15 weist, ein Anschlagteil 16 vorgesehen. Sofern, wie dargestellt, die Rahmenseite 15 bzw. deren Schenkel verkürzt sind, schlagen die Abschnitte 6 direkt am Anschlagteil 16 an; als Variante können natürlich die Seite 15 bzw. deren Schenkel bis zum (dann weiter zurückstehenden) Anschlagteil 16 reichen und mit diesem zusammenwirken.

Die dargestellte Brüstungskanalanordnung lässt sich ferner nach Bedarf mit Apparateträgern 30 ausrüsten, welche die benötigten Steckdosen und weiteren Apparate 34 aufnehmen. Zweckmässige Ausführungen und Anordnungs-Varianten sind in Verbindung mit den weiteren Figuren beschrieben.

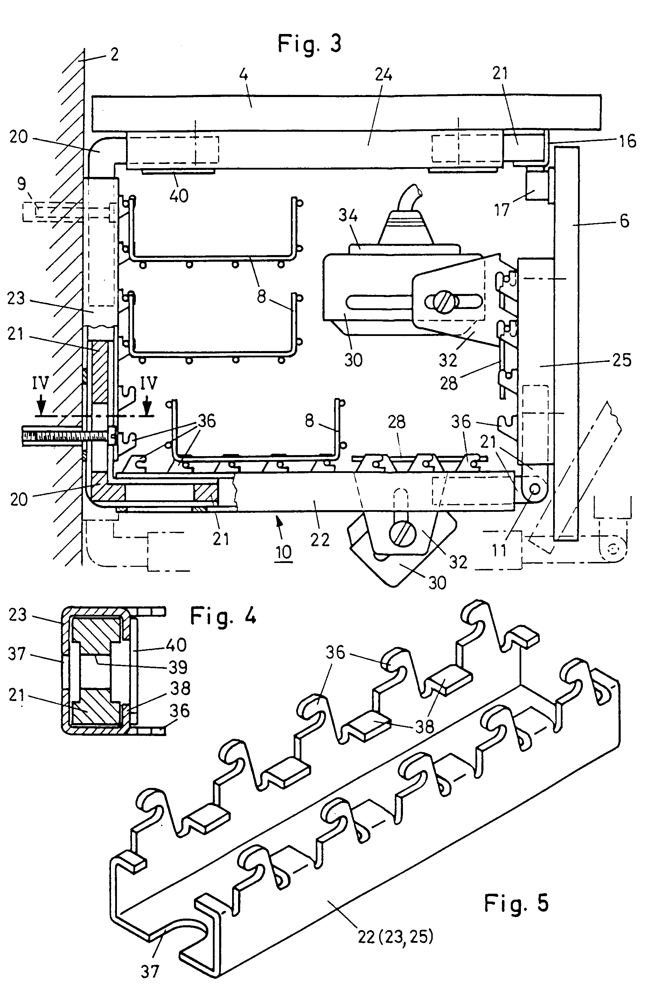

Die Fig. 3 zeigt ein besonders zweckmässiges Ausführungsbeispiel eines einzelnen Rahmens 10, wobei dieser aus vier geraden Seitenabschnitten 22 bis 25, einem Scharnier 11 und zwei starren, zweischenkligen Eckverbindern 20 zusammengesetzt ist. Der obere Seitenabschnitt 24 trägt die Fensterbank 4 und ist mit dem einstellbaren Anschlagteil 16 versehen, während am ausschwenkbaren Seitenabschnitt 25 die Frontblende 6 befestigt ist; um die Frontblende 6 in der dargestellten Schliesslage zu sichern, ist der Anschlagteil 16 mit einem geeigneten Schnappverschluss, beispielsweise einem Magnetverschluss 17 versehen.

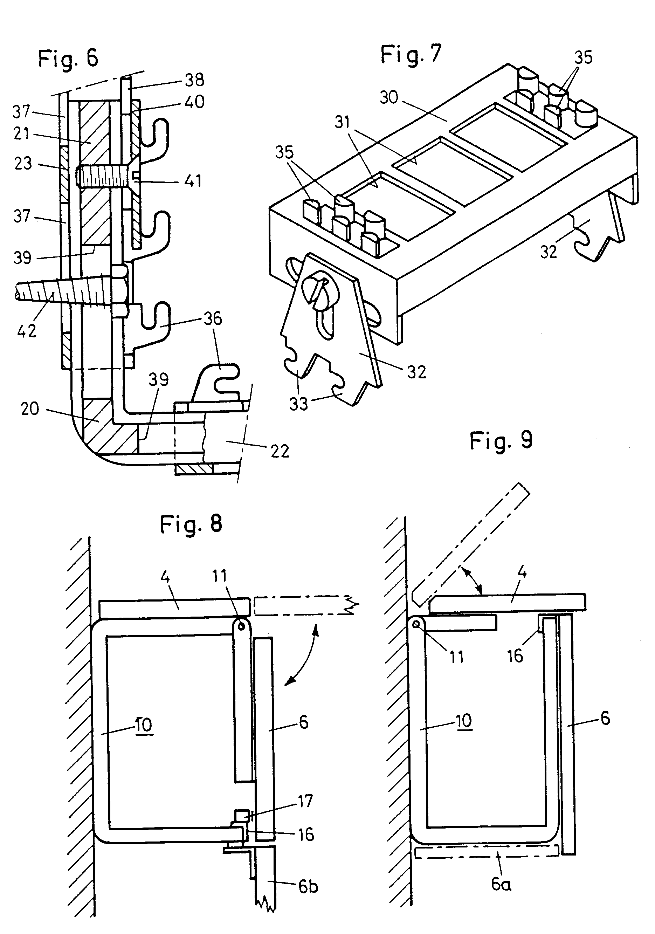

Besonders geeignet ist ein baukastenartiger Aufbau der Rahmen 10 mit lösbarer und längeneinstellbarer Verbindung der Seitenabschnitte 22 bis 25 mit den Schenkeln des Scharniers 11 und der Eckverbinder 20 sowie mit dem Anschlagteil 16. Nähere Einzelheiten dieses Aufbaus sind aus den Figuren 4 bis 6 ersichtlich. Demgemäss sind die geraden Seitenabschnitte 22 bis 25 durch Abschnitte eines im wesentlichen rechteckigen Hohlprofils gebildet, und das Scharnier 11, die Eckverbinder 20 und der Anschlagteil 16 sind je mit Schenkeln 21 versehen, die sich in Längsrichtung in das Hohlprofil einschieben lassen. Das etwa C-förmige Hohlprofil ist an seiner "Rückseite" mit Längsschlitzen 37 versehen, und die Schenkel 21 weisen Längsschlitze 39 auf. Die Schlitze 37 und 39 dienen zum Durchstecken von Schrauben 42 (Fig. 6) für die Wandbefestigung der Rahmen 10 oder für die Montage der Verkleidungsplatten 4 und 6 an den Rahmen. Die Fixierung zwischen den Schenkeln 21 und den Profilabschnitten mit einstellbarer Längsüberlappung erfolgt mittels Klemmplatten 40 und Schrauben 41, welche in einer Gewindebohrung der Schenkel stecken (Fig. 6).

Die dargestellte Konstruktion ermöglicht den Zusammenbau bzw. die Vormontage von Rahmen beliebiger Grösse mit "liegendem" oder "stehendem" Rechteckformat aus wenigen und einfachen Standardteilen. Auch bei gegebener Länge der Profilabschnitte 22 bis 25 kann dank der einstellbaren Verbindung mit Klemmplatten 40 und Schrauben 41 noch bauseits eine Querschnitts-Anpassung vorgenommen werden, wie in Fig. 3 strichpunktiert angedeutet.

Ein baukastenartiger Zusammenbau der Rahmen 10 aus Profilabschnitten, die längeneinstellbar mit Eckverbindern usw. verbunden sind, lässt sich natürlich auch mit Abschnitten eines U-Profils anstelle des dargestellten C-Profils realisieren.

Selbstverständlich kann das Scharnier 11 auch in einer andern Ecke des Rahmens 10 angeordnet werden, wie die Figuren 8 und 9 schematisch zeigen; bei der Variante nach Fig. 8 lässt sich dann die Frontblende 6 von unten hochklappen, und die Anordnung nach Fig. 9 ermöglicht das Aufklappen der Fensterbank 4, während die Frontblende 6 feststehend ist. Die Fig. 8 zeigt ausserdem die Möglichkeit, eine nach unten ragende Brüstungsverkleidung 6b an den Rahmen 10 zu montieren. Während sodann der durchgehende Brüstungskanal in der Regel unten offen belassen wird, kann gemäss Fig. 9 bei Bedarf auch eine untere Abdeckplatte 6a an den Rahmen 10 befestigt werden.

Verschiedene Möglichkeiten der Innen-Ausrüstung der Kabelkanalanordnung sind ebenfalls aus der Fig. 3 ersichtlich: zum Einhängen von durchgehenden Leitungskanälen 8 sind an einzelnen Rahmenseiten - hier die Seiten 22, 23 und 25 - Abschnitte eines Profils gemäss Fig. 5 vorgesehen. Dieses Profil weist Hakenreihen 36 auf, wobei sich zwischen den Haken Lappen 38 für die verschiebbare Auflage der Klemmplatten 40 befinden (Fig. 4).

Die Hakenreihen 36 dienen zum Einhängen der vorzugsweise aus Drahtgitter gefertigten Leitungskanäle 8 in wählbarer Lage, wobei selbstverständlich Kanäle von unterschiedlichem Querschnitt je nach Bedarf verwendet werden können.

Zur Ausrüstung gehören ferner Apparateträger 30, wie beispielsweise in Fig. 7 dargestellt. Solche gehäuseartigen Apparateträger sind mit Durchbrüchen oder "Fenstern" 31 versehen, in denen die Apparate, wie Steckdosen, Schalter usw. montiert werden. Zwei seitlich einstellbar befestigte Befestigungsplatten 32 sind mit Haken 33 versehen, welche gleiche Teilung aufweisen wie die Haken 36 und zur Montage der Apparateträger 30 dienen. Die Haken 33 können entweder an Längsstegen eines Leitungskanals 8 eingehängt werden (nicht dargestellt) oder aber an einem gitterartigen Zwischenträger 28, welcher seinerseits an Hakenreihen 36 eingehängt ist. Wie ersichtlich, können somit Apparateträger 30 auf vielfältige Weise entweder im Innern des Rahmenquerschnittes oder nach unten herausragend angebracht werden, wobei auch eine geeignete Neigung der Apparate durch Ausrichten der Hakenorgane 32, 33 eingestellt werden kann. Die Apparateträger 30 können gemäss Fig. 7 mit Zugentlastungen 35 für Apparatekabel ausgerüstet sein, welche z.B., wie dargestellt, eine Art wellenförmige Nut bilden, in welche das Kabel zur Fixierung eingedrückt wird. Zugentlastungsorgane der dargestellten oder ähnlicher Art lassen sich auch an anderen Stellen der Brüstungskanalanordnung im Bereich der Apparate 34 anbringen.

Die beschriebene Brüstungskanalanordnung ist somit ausserordentlich anpassungsfähig hinsichtlich Abmessungen des Gesamtquerschnittes wie auch bezüglich Bestückung der Rahmen mit Leitungskanälen und Apparaten, wobei von Fall zu Fall eine optimale Ausnützung der Rahmenquerschnitte erreicht wird. Gleichwohl bleibt die Zugänglichkeit zu den Apparaten wie auch zu den Leitungskanälen gewährleistet. Auch nachträgliche Aenderungen in der Leitungsführung und Apparatebestückung sind jederzeit möglich. Ein besonderer Vorteil besteht darin, dass die Verkleidungsplatten völlig unabhängig von der eigentlichen Brüstungskanal-Konstruktion gestaltet und auch erst nach Einbau der Installationen von geeignetem Personal montiert werden können. So lassen sich Verkleidungen aus verschiedensten Werkstoffen (Holz, Kunststoff, Metall usw.) verwenden und bezüglich Farbe und Oberfläche an die Raumgestaltung anpassen; ein späteres Auswechseln ist ohne weiteres möglich.

## Patentansprüche

1. Brüstungskanalanordnung mit mehreren austauschbar aufgenommenen sich in Kanal-Längsrichtung erstreckenden Leitungskanälen, gekennzeichnet durch mehrere im Abstand voneinander angeordnete, viereckige Rahmen (10), welche zur Wandbefestigung mit zueinander parallelen Ebenen und zur austauschbaren Aufnahme der im Innern der Rahmen (10) durchlaufenden Leitungskanäle (8) ausgebildet sowie als Träger von aussenliegenden Verkleidungsplatten (4, 6) an mindestens zwei Seiten bestimmt sind, wobei jeweils eine (15) der vier Rahmenseiten (12-15) mit einer angrenzenden Rahmenseite (12) über ein Scharnier (11) verbunden und ausschwenkbar ist.

2. Brüstungskanalanordnung nach Anspruch 1, dadurch gekennzeichnet, dass die ausschwenkbare Rahmenseite (15) zwei nebeneinanderliegende, einzeln angelenkte Schenkel (15a, 15b) aufweist.

3. Brüstungskanalanordnung nach einem der vorangehenden Ansprüche, dadurch gekennzeichnet, dass das freie Ende der feststehenden Rahmenseite (14), welche gegen die ausschwenkbare Rahmenseite (15) weist, einen einstellbaren Anschlagteil (16) aufweist.

4. Brüstungskanalanordnung nach einem der vorangehenden Ansprüche, dadurch gekennzeichnet, dass die viereckigen Rahmen (10) je aus geraden Seitenabschnitten (22-25), dem Scharnier (11) und zwei starren, zweischenkligen Eckverbindern (20) zusammengesetzt sind.

5. Brüstungskanalanordnung nach Anspruch 4, dadurch gekennzeichnet, dass die Seitenabschnitte (22-25) mit den Schenkeln (21) des Scharniers (11) und der Eckverbinder (20) lösbar und längeneinstellbar verbunden sind.

6. Brüstungskanalanordnung nach einem der vorangehenden Ansprüche, dadurch gekennzeichnet, dass wenigstens eine der Rahmenseiten (12-15) mit Hakenreihen (36) zum Einhängen von Leitungskanälen (8) in wählbarer Lage versehen ist.

7. Brüstungskanalanordnung nach Anspruch 6, dadurch gekennzeichnet, dass Leitungskanäle (8) aus einer Gitterstruktur mit Längsstegen und diese verbindenden Querstegen verwendet sind.

8. Brüstungskanalanordnung nach einem der vorangehenden Ansprüche, gekennzeichnet durch in wählbarer Lage befestigbare Apparateträger (30).

9. Brüstungskanalanordnung nach den Ansprüchen 7 und 8, dadurch gekennzeichnet, dass die Apparateträger (30) mit Hakenorganen (32, 33) zum Einhängen an den Längskanälen (8) versehen sind.

10. Brüstungskanalanordnung nach den Ansprüchen 6 und 9, gekennzeichnet durch an den Hakenreihen (36) einhängbare, gitterförmige Zwischenträger (28) zur Aufnahme der Hakenorgane (32, 33).

11. Brüstungskanalanordnung nach Anspruch 9, dadurch gekennzeichnet, dass die Hakenorgane (32, 33) lageeinstellbar mit den Apparateträgern (30) verbunden sind.

12. Brüstungskanalanordnung nach einem der vorangehenden Ansprüche, gekennzeichnet durch im Bereich von Apparaten (34) angeordnete Zugentlastungsorgane (35) für Apparatekabel.

## Claims

1. A parapet conduit arrangement with a plurality of interchangeably accommodated line channels extending in the longitudinal direction of the conduit, characterised by a plurality of quadrangular frames (10) disposed at a distance from each other which are constructed with planes parallel to each other for fastening to a wall, which are constructed for replaceably accommodating the line channels (8) running through inside the frames (10), and which are appointed as supports for externally situated facing panels (4, 6) on at least two sides, wherein one (15) of the four frame sides (12-15) in each case is attached to an adjoining frame side (12) via a hinge (11) and is outwardly pivotable.

2. A parapet conduit arrangement according to claim 1, characterised in that the outwardly pivotable frame side (15) has two individually linked limbs (15a, 15b) disposed side by side.

3. A parapet conduit arrangement according to one of the preceding claims, characterised in that the free end of the fixed frame side (14) which is oriented towards the outwardly pivotable frame side (15) has an adjustable stop element (16).

4. A parapet conduit arrangement according to any one of the preceding claims, characterised in that the quadrangular frames (10) are each assembled from straight side sections (22-25), from the hinge (11), and from two rigid, double-limbed corner connectors (20).

5. A parapet conduit arrangement according to claim 4, characterised in that the side sections (22-25) are connected detachably and in a length-adjustable manner to the limbs (21) of the hinge (11) and of the corner connectors (20).

6. A parapet conduit arrangement according to any one of the preceding claims, characterised in that at least one of the frame sides (12-15) is provided with rows of hooks (36) for suspending line channels (8) in selectable locations.

7. A parapet conduit arrangement according to claim 6, characterised in that line channels (8) are used comprising a grid structure with longitudinal ribs and transverse ribs connecting the latter.

8. A parapet conduit arrangement according to any one of the preceding claims, characterised by apparatus supports (30) fixable at selectable locations.

9. A parapet conduit arrangement according to claims 7 and 8, characterised in that the apparatus supports (30) are provided with hook elements (32, 33) for suspension on the longitudinal channels (8).

10. A parapet conduit arrangement according to claims 6 and 9, characterised by grid-like intermediate supports (28), which can be suspended on the rows of hooks (36), for receiving the hook elements (32, 33).

11. A parapet conduit arrangement according to claim 9, characterised in that the hook elements (32, 33) are attached to the apparatus supports (30) in a positionally adjustable manner.

12. A parapet conduit arrangement according to any one of the preceding claims, characterised by strain relief elements (35) for apparatus cables disposed in the region of apparatuses (34).

## Revendications

1. Agencement de conduit d'allège, comportant plusieurs gouttières pour conducteurs qui s'étendent suivant la direction longitudinale du conduit et y sont reçues d'une manière permettant de les remplacer, caractérisé par plusieurs cadres quadrangulaires (10) qui sont disposés d'une manière espace les uns des autres et sont réalisés en vue de la fixation au mur dans des plans parallèles entre eux et en vue de recevoir, d'une manière remplaçable, les gouttières (8) pour conducteurs qui traversent les cadres (10) et servent aussi de supports, sur au moins deux faces, pour des panneaux d'habillage (4, 6) disposés extérieurement, l'un (15) des quatre côtés (12-15) de chaque cadre étant relié à un côté adjacent (12) du cadre par l'intermédiaire d'une charnière (11) et agencé de façon à pouvoir pivoter vers l'extérieur.

2. Agencement de conduit d'allège suivant la revendication 1, caractérisé en ce que le côté rabattable (15) des cadres comporte deux branches (15a, 15b) disposées côte à côte et articulées séparément.

3. Agencement de conduit d'allège suivant l'une des revendications précédentes, caractérisé en ce que l'extrémité libre du côté fixe (14) des cadres qui est tournée vers le côté rabattable (15) comporte une pièce de butée (16) à position réglable.

4. Agencement de conduit d'allège suivant l'une des revendications précédentes, caractérisé en ce que les cadres quadrangulaires (10) sont composés chacun de tronçons rectilignes de côté (22-25), de la charnière (11) et de deux éléments de liaison d'angle (20) rigides et à deux branches.

5. Agencement de conduit d'allège suivant la revendication 4, caractérisé en ce que les tronçons de côté (22-25) sont reliés aux branches (21) de la charnière (11) et des éléments de liaison d'angle (20) d'une manière amovible et réglable en longueur.

6. Agencement de conduit d'allège suivant l'une des revendications précédentes, caractérisé en ce qu'au moins l'un des côtés (12-15) des cadres est pourvu de rangées (36) de crochets servant à suspendre des gouttières (8) pour conducteurs en une position pouvant être choisie.

7. Agencement de conduit d'allège suivant la revendication 6, caractérisé en ce qu'il est utilisé des gouttières (8) pour conducteurs qui sont formées d'une structure en grille comportant des tiges longitudinales et des tiges transversales réunissant ces dernières.

8. Agencement de conduit d'allège suivant l'une des revendications précédentes, caractérisé par des supports (30) d'éléments d'appareillage qui sont agencés de façon à pouvoir être fixés en une position pouvant être choisie.

9. Agencement de conduit d'allège suivant la revendication 8 lorsqu'elle dépend de la revendication 7, caractérisé en ce que les supports (30) d'éléments d'appareillage sont pourvus d'organes à crochets (32, 33) en vue de la suspension sur les gouttières (8) pour conducteurs.

10. Agencement de conduit d'allège suivant la revendication 9 lorsqu'elle dépend de la revendication 6, caractérisé par des supports intermédiaires (28), en forme de grille, qui sont agencés de façon à pouvoir être suspendus aux rangées (36) de crochets et servent à recevoir les organes à crochets (32, 33).

11. Agencement de conduit d'allège suivant la revendication 9, caractérisé en ce que les organes à crochets (32, 33) sont reliés aux supports (30) d'éléments d'appareillage de façon que leur position puisse être réglée.

12. Agencement de conduit d'allège suivant l'une des revendications précédentes, caractérisé par des organes (35) de décharge de traction qui sont destinés aux conducteurs des éléments d'appareillage (34) et sont disposés dans la zone de ces derniers.
